**Europäisches Patentamt**

**European Patent Office**

**Office européen des brevets**

(19)

(11) Veröffentlichungsnummer: **0 254 108 B1**

(12) **EUROPÄISCHE PATENTSCHRIFT**

(45) Veröffentlichungstag der Patentschrift: **13.03.91**

(51) Int. Cl.⁵: **B23C 3/30**

(21) Anmeldenummer: **87109654.1**

(22) Anmeldetag: **04.07.87**

(54) **Verfahren zur Herstellung von Längsnuten in einer Welle.**

(30) Priorität: **23.07.86 DE 3624806**

(43) Veröffentlichungstag der Anmeldung:
**27.01.88 Patentblatt 88/04**

(45) Bekanntmachung des Hinweises auf die
Patenterteilung:
**13.03.91 Patentblatt 91/11**

(84) Benannte Vertragsstaaten:
**AT BE CH ES FR GB IT LI SE**

(56) Entgegenhaltungen:
**DE-B- 1 290 027**
**DE-B- 2 614 996**
**DE-C- 3 438 598**
**FR-A- 2 481 169**

(73) Patentinhaber: **Borys, Wulf-Eckhard, Dr.-Ing.**
**Breiter Bören 11**
**W-3260 Rinteln 6(DE)**

(72) Erfinder: **Borys, Wulf-Eckhard, Dr.-Ing.**
**Breiter Bören 11**
**W-3260 Rinteln 6(DE)**

EP 0 254 108 B1

## Beschreibung

Gegenstand der Erfindung ist ein Verfahren gemäß dem Oberbegriff des Patentanspruches, siehe hierzu DE-C 34 38 598.

Für die Herstellung von Paßfedernuten auf CNC-Drehmaschinen mit angetriebenen Werkzeugen werden bisher Maßräser verwendt, die zur Verwirklichung der notwendigen Nutlänge und der Nuttiefe in zwei Achsen verfahren werden. Da derartige Fräser durch Verschleiß unbraucher werden und nicht nachgeschliffen werden können, ist der für die Herstellung von Paßfedernuten auf Drehmaschinen zu treibende Aufwand sehr hoch.

Die bei Fräsmaschinen zur Herstellung von Kanälen, Nuten und dergleichen geübten Verfahren, die sich jeweils eines in mehreren Fräsgängen geführten Untermaßfräsers bedienen, bedürfen einer zusätzlichen Querbewegung des Fräsers bzw. des Werkstückes (vgl, DE-AS 11 53 966). Eine solche Bewegung ist aber bei Drehmaschinen nicht möglich.

Der Erfindung liegt die Aufgabe zugrunde, auch bei Drehmaschinen eine einfache Herstellbarkeit von Paßfedernuten mit einem geringen Aufwand an Werkzeugen zu erreichen.

Die gestellte Aufgabe wird gelöst durch die Verwendung eines konischen Untermaßfräsers, mit dem zunächst ein erster Teil der Nut mit einer Nutseitenwand und nach einer der geforderten Nutbreite und dem Fräserdurchmesser entsprechenden Verdrehung der bearbeiteten Welle ein zweiter Teil der Nut mit der anderen Nutseitenwand gefräst wird, wobei die Konizität des Untermaßfräsers der erforderlichen Verdrehung der Welle und den innerhalb eines zulässigen Toleranzbereiches vorgegebenen Winkeln der Nutseitenwände entspricht.

Die zur erfindungsgemäßen Lösung führende Überlegung hatte zu berücksichtigen, daß der bekannte, bei Fräsermaschinen für die Nutherstellung verwendete Untermaßfräser keine Anwendung finden konnte, da die Verdrehung einer Welle in einer Drehmaschinen nicht der Querbewegung eines Werkstückes auf einer Fräsmaschine entspricht. Die Verwendung eines Untermaßfräsers der bekannten Art hätte bei der Welle zu einer außerhalb des zulässigen Toleranzbereiches gelegenen Schrägheit der Nutseitenwände geführt. Durch die Verwendung von konischen Untermaßfräsern, deren Konizität in etwa der notwendigen Achsverdrehung entspricht, kann aber die sich ergebende Schrägheit auf einen zulässigen Wert reduziert werden.

Die beim erfindungsgemäßen Verfahren zu verwendenen Untermaßfräser können etwa bis zu 15 mal nachgeschliffen werden, so daß sich die Werkzeugkosten auf ca. 10 % des bei den bisher verwendeten Paßmaßfräsern notwendigen Aufwendes reduzieren.

## Ansprüche

Verfahren zur Herstellung von Längsnuten in einer Welle, welche in einer Drehmaschine mit gesteuerter Hauptspindel eingespannt ist, mittels eines zur Erreichung einer geforderten Nutlänge und -tiefe in zwei Achsen verfahrbaren Fräsers, **gekennzeichnet durch** die Verwendung eines konischen Untermaßfräsers, mit dem zunächst ein erster Teil der Nut mit einer Nutseitenwand und nach einer der geforderten Nutbreite und dem Fräserdurchmesser entsprechenden Verdrehung der bearbeiteten Welle ein zweiter Teil der Nut mit der anderen Nutseitenwand gefräst wird, wobei die Konizität des Untermaßfräsers der erforderlichen Verdrehung der Welle und den innerhalb eines zulässigen Toleranzbereiches vorgegebenen Winkeln der Nutseitenwände entspricht.

## Claims

Procedure to machine longitudinal keyways in a shaft which is mounted into a lathe with controlled work spindle, using a milling cutter which can be positioned along two axes to obtain the required keyway length and depth, characterized by using a conical undersize milling cutter with the help of which a first part of the keyway with a keyway side is milled and then, after obtaining a required keyway width, the machined shaft is turned according to the milling cutter diameter, the second part of the keyway with the other keyway side is milled, the conicality of the undersize milling cutter corresponding to the required turning of the shaft and the given angles of the keyway sides within a permissible tolerance.

## Revendications

Procédé de fabrication de rainures longitudinales dans un arbre qui est serré dans un tour avec arbre moteur commandé, à l'aide d'une fraise avec positionnement sur deux axes qui permet d'obtenir la longueur et la profondeur déterminées de rainure, caractérisé par l'utilisation d'une fraise conique de dimensions innféieures à la côte nominale, qui permet de fraiser, dans un premier temps, une première partie de la rainure avec une face latérale, puis, après une torsion de l'arbre traité correspondant à la largeur déterminée de la rainure et au diamètre de la fraise, une deuxième partie de la rainure avec une face latérale différente, et ce, avec une conicité de la fraise de dimensions inférieures à la côte nominale qui correspond à la torsion nécessaire de l'arbre et aux angles définis des faces latérales de la rainure selon la plage tolérancée admissible.